# EUROPEAN PATENT APPLICATION

(11) **EP 3 267 735 A1**
(43) Date of publication of application: **10.01.2018**
(21) Application number: 16758618.9
(22) Date of filing: 25.02.2016
(51) Int. Cl.: H04W 48/18, H04M 11/00, H04M 15/00, H04W 48/14, H04W 48/16, H04W 60/00, H04W 76/02

(54) **COMMUNICATION SYSTEM, BASE STATION, DETERMINATION METHOD, COMMUNICATION TERMINAL, AND CONNECTION METHOD**

(30) Priority: 04.03.2015 JP 2015042152
(71) Applicant: NEC Corporation, Tokyo 108-8001 (JP)
(72) Inventor: TAMURA, Toshiyuki, Tokyo 108-8001 (JP)
(74) Representative: MacDougall, Alan John Shaw
(86) International application number: PCT/JP2016/001007
(87) International publication number: WO 2016/139919

(57) **Abstract**

To provide a communication system that allows a user to flexibly select a carrier. The communication system according to the present invention includes: core networks (40) and (41) managed by communication carriers; a management apparatus (30) configured to manage connection information to be used at a time of connection to the core networks (40) and (41); and a base station (20) configured to be connected to the core network (40), the core network (41), and the management apparatus (30). The base station (20) transmits, upon receiving a first connection request message that does not specify the communication carrier from a communication terminal (10), information regarding a plurality of communication carriers to the communication terminal (10) and transmits connection information regarding one of the plurality of communication carriers selected by the communication terminal (10) to the communication terminal (10).

## Description

### Technical Field

The present invention relates to a communication system, a base station, a determination method, a communication terminal, and a connection method, and relates to, in particular, a communication system in which a communication terminal selects a communication carrier to be used, a base station, a determination method, a communication terminal, and a connection method.

### Background Art

In recent years, mobile telephones, smartphones and the like have become widespread and communication carriers have provided various kinds of services for the smartphones and the like. Non-Patent Literature 1 discloses that, in Europe, where Global System for Mobile communications (GSM) (registered trademark) is used as a communication system, a communication carrier is able to provide services for notifying a mobile telephone or the like of a user, who is going to make a phone call, of a charging rate. When the user has agreed to the charging rate that he/she has been notified of, outgoing call processing is continued. Further, as disclosed in Non-Patent Literature 2, a technique of introducing a Mobile Edge Computing (MEC) device in a location close to the base station, that is, in a location close to the edge of the mobile communication network, has been studied.

### Citation List

### Non-Patent Literature

[Non-Patent Literature 1] 3GPP TS 22.086 V12.0.0 (2014-10)
[Non-Patent Literature 2] Mobile-Edge Computing-Introductory Technical White Paper (September 2014)

### Summary of Invention

### Technical Problem

In recent years, a large number of mobile virtual network operators (MVNOs) have provided services and the charging rate during calls often varies among the carriers. Non-Patent Literature 1 does not disclose, however, a technique in which a user compares the charging rates of a plurality of carriers and selects the carrier that he/she will use when making a call. Therefore, there is a problem that the user cannot flexibly select the carrier that he/she will use when making a call.

The present disclosure aims to provide a communication system that allows a user to flexibly select a carrier, a base station, a determination method, a communication terminal, and a connection method.

### Solution to Problem

A communication system according to a first aspect of the present invention includes: a core network managed by a communication carrier; a management apparatus configured to manage connection information to be used at a time of connection to the core network; and a base station configured to be connected to the core network and the management apparatus, in which the base station transmits, upon receiving a first connection request message that does not specify the communication carrier from a communication terminal, information regarding a plurality of communication carriers to the communication terminal and transmits connection information regarding one of the plurality of communication carriers selected by the communication terminal to the communication terminal.

A base station according to a second aspect of the present invention is a base station configured to be connected to a core network managed by a communication carrier and a management apparatus configured to manage connection information to be used at a time of connection to the core network, in which the base station includes a determination unit configured to transmit, upon receiving a first connection request message that does not specify the communication carrier from a communication terminal, information regarding a plurality of communication carriers to the communication terminal and transmit connection information regarding one of the plurality of communication carriers selected by the communication terminal to the communication terminal.

A determination method according to a third aspect of the present invention is a determination method in a base station configured to be connected to a core network managed by a communication carrier and a management apparatus configured to manage connection information to be used at a time of connection to the core network, the determination method including: transmitting, upon receiving a first connection request message that does not specify the communication carrier from a communication terminal, information regarding a plurality of communication carriers to the communication terminal; and transmitting connection information regarding one of the plurality of communication carriers selected by the communication terminal to the communication terminal.

A communication terminal according to a fourth aspect of the present invention is a communication terminal configured to communicate with a base station, the base station being configured to be connected to a core network managed by a communication carrier and a management apparatus configured to manage connection information to be used at a time of connection to the core network, the communication terminal including: a first communication unit configured to transmit a first connection request message that does not specify the communication carrier; a selection unit configured to select one of a plurality of communication carriers transmitted from the base station; and a second communication unit configured to transmit a second connection request message to a core network managed by the selected communication carrier using connection information on the selected communication carrier transmitted from the management apparatus.

A connection method according to a fifth aspect of the present invention is a connection method in a communication terminal configured to communicate with a base station, the base station being configured to be connected to a core network managed by a communication carrier and a management apparatus configured to manage connection information to be used at a time of connection to the core network, the method including: transmitting a first connection request message that does not specify the communication carrier; selecting one of a plurality of communication carriers transmitted from the base station; and transmitting a second connection request message to a core network managed by the selected communication carrier using connection information on the selected communication carrier transmitted from the management apparatus.

### Advantageous Effects of Invention

According to the present invention, it is possible to provide a communication system that allows a user to flexibly select a carrier, a base station, a determination method, a communication terminal, and a connection method.

### Brief Description of Drawings

Fig. 1 is a configuration example of a communication system according to a first embodiment;
Fig. 2 is a configuration example of a base station according to a second embodiment;
Fig. 3 is a configuration example of an MEC device according to the second embodiment;
Fig. 4 is a configuration example of a communication terminal according to the second embodiment;
Fig. 5 is a diagram showing a flow of an Attach determination process in the base station according to the second embodiment;
Fig. 6 is a diagram showing a flow of a Limited Attach process according to the second embodiment;
Fig. 7 is a diagram showing a flow of a Limited Attach process according to a third embodiment; and
Fig. 8 is a diagram showing a flow of the Limited Attach process according to the third embodiment.

### Description of Embodiments

### (First Embodiment)

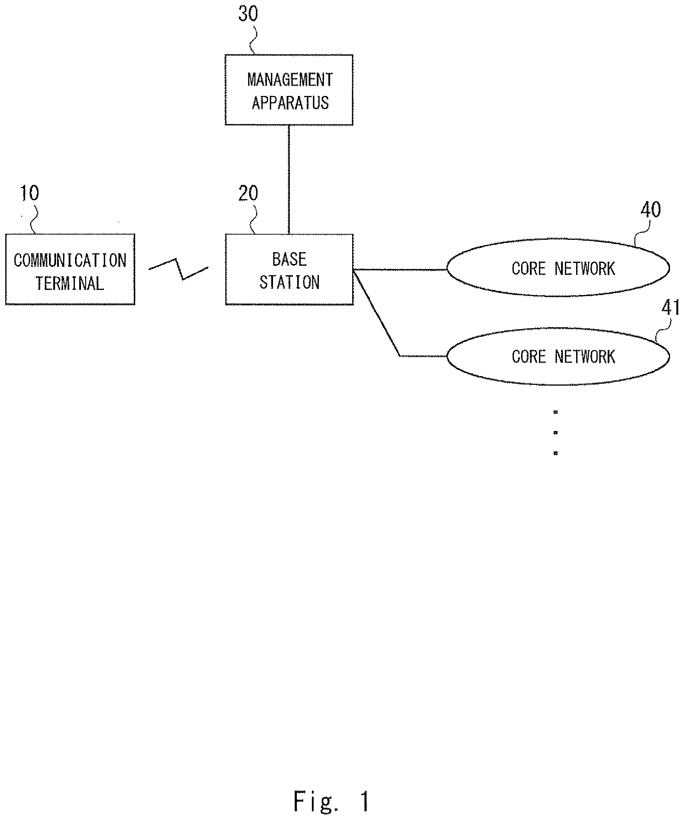

In the following description, with reference to the drawings, embodiments of the present invention will be described. First, with reference to Fig. 1, a configuration example of a communication system according to a first embodiment of the present invention will be described. A communication system shown in Fig. 1 includes a communication terminal 10, a base station 20, a management apparatus 30, and core networks 40 and 41.

The core networks 40 and 41 are networks managed by communication carriers. When the core networks 40 and 41 are, for example, the networks defined by the 3rd Generation Partnership Project (3GPP), they include node apparatuses such as a Mobility Management Entity (MME), a Serving GPRS Support Node (SGSN) and the like. The communication carrier may be, for example, a mobile network operator (MNO) that owns the network by itself or may be a mobile virtual network operator (MVNO). Further, while the core networks 40 and 41 are owned by the mobile network operators, a configuration in which the core networks 40 and 41 are connected to another core network owned by another mobile virtual network operator may be employed.

The management apparatus 30 manages connection information to be used when the communication terminal 10 is connected to the core network 40 and connection information to be used when the communication terminal 10 is connected to the core network 41. The management apparatus 30 may be a computer apparatus that is operated by executing, by a Central Processing Unit (CPU), a program stored in a memory. The connection information may be, for example, identification information or the like for identifying the communication carrier. Alternatively, the connection information may be identification information that the core network 40 or 41 uses to uniquely identify the communication terminal 10 when the communication terminal 10 uses the core network 40 or 41.

The base station 20 is connected to the core network 40, the core network 41, and the management apparatus 30. While Fig. 1 shows a state in which the base station 20 is connected to the core network 40 and the core network 41, three or more core networks may be connected to the management apparatus 30. The state in which the base station 20 is connected to the core network 40 and the core network 41 includes a state in which the base station 20 is able to communicate with the node apparatus constituting the core network 40 and the core network 41. Further, the state in which the base station 20 is connected to the management apparatus 30 includes a state in which the base station 20 is able to communicate with the management apparatus 30. The base station 20 may be, for example, an evolved Node B (eNB) that can use Long Term Evolution (LTE) as a wireless communication standard in the 3GPP, a NodeB used in Wideband Code Division Multiple Access (WCDMA) (registered trademark), a base station that uses another wireless communication standard or the like.

The base station 20 receives a connection request message that does not specify the communication carrier from the communication terminal 10. Upon receiving the connection request message that does not specify the communication carrier, the base station 20 transmits information regarding a plurality of communication carriers to the communication terminal 10. The plurality of communication carriers are, for example, communication carriers that manage the core networks connected to the base station 20. The base station 20 transmits, for example, information indicating the communication carriers that manage the core networks connected thereto to the communication terminal 10.

The base station 20 transmits connection information regarding the communication carrier selected by the communication terminal 10 to the communication terminal 10. When one of the plurality of communication carriers is selected by the communication terminal 10, for example, the base station 20 specifies the selected communication carrier. Further, the base station 20 receives, from the management apparatus 30, connection information to be used for the connection to the core network managed by the selected communication carrier. The base station 20 transmits the received connection information to the communication terminal 10.

As described above, by using the communication system shown in Fig. 1, the management apparatus 30 is able to hold the connection information to be used for the connection to the core network. Therefore, even when the communication terminal 10 does not hold the connection information to be used for the connection to one of the core networks in advance, the base station 20 is able to receive, from the management apparatus 30, the connection information that is necessary for the communication terminal 10 to connect to the core network to which the communication terminal 10 desires to connect and to transmit the received connection information to the communication terminal 10. Accordingly, the communication terminal 10 is able to connect to a desired core network using the received connection information. In other words, the communication terminal 10 is able to connect to the core network managed by the desired communication carrier.

Further, when the carrier provides the communication terminal for the user, the user is able to start using services without the intervention of the customer center of the carrier after purchasing the communication terminal in a general shop or the like.

### (Second Embodiment)

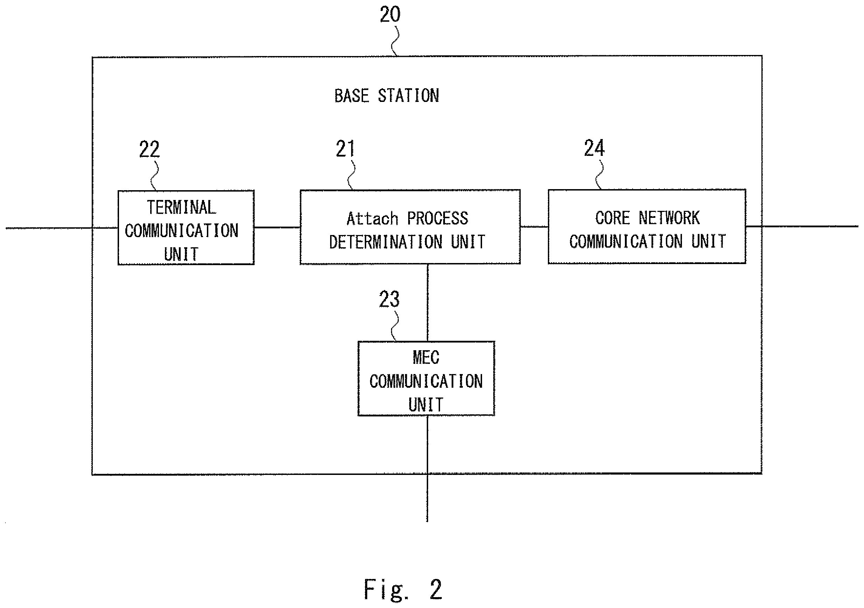

Next, with reference to Fig. 2, a configuration example of the base station 20 according to a second embodiment of the present invention will be described. The base station 20 is assumed to be an eNB, a NodeB or the like capable of transmitting or receiving a message involved in the Attach process defined by the 3GPP.

The base station 20 includes an Attach process determination unit 21, a terminal communication unit 22, an MEC communication unit 23, and a core network communication unit 24. The term "communication unit" may also be called a transmission/reception unit. The Attach process determination unit 21 determines whether to perform a normal Attach process or to perform a Limited Attach process. The normal Attach process is an Attach process defined by the 3GPP and is a process performed by the communication terminal to connect to a core network managed by a communication carrier when the power of the communication terminal has been turned on.

The Limited Attach process is, for example, a process to allow the communication terminal to temporarily perform communication in order to cause the communication terminal to select to which core network managed by which communication carrier it should be connected. The services that the communication terminal which is able to temporarily perform communication by the Limited Attach process can use are limited.

For example, the communication terminal which is able to temporarily perform communication by the Limited Attach process is not provided with services such as a voice call and an Internet connection. The communication terminal which is able to temporarily perform communication by the Limited Attach process is provided with, for example, services such as selection of the communication carrier, download of Subscriber Identity Module (SIM) data to connect to the core network of the selected communication carrier, and an authentication process to download the SIM data.

The base station 20 receives, for example, an Attach message transmitted from the communication terminal 10 by the terminal communication unit 22. When the communication carrier has not been configured in the Attach message that it has received, the base station 20 may determine to execute the Limited Attach process. Alternatively, the base station 20 may determine to execute the Limited Attach process when an identifier indicating the communication terminal has not been configured in the Attach message transmitted from the communication terminal 10. Alternatively, the base station 20 may determine to execute the Limited Attach process when an identifier distributed from the communication carrier has not been configured in the Attach message transmitted from the communication terminal 10. When the base station 20 determines that it executes the Limited Attach process, the base station 20 transmits a Limited Attach message to an MEC (Mobile Edge Computing) device 31 using the MEC communication unit 23. The MEC device 31 corresponds to the management apparatus 30 shown in Fig. 1. The MEC device 31 will be described later in detail. Further, the base station 20 may allow the communication terminal 10 that has performed the Limited Attach process to perform only communication with the MEC device 31. That is, the base station 20 may perform control not to allow the communication between the communication terminal 10 that has performed the Limited Attach process and the core network 40 or 41. Further, when it is determined that the normal Attach process will be executed, the MEC communication unit 23 transmits the Attach message to the core network using the core network communication unit 24.

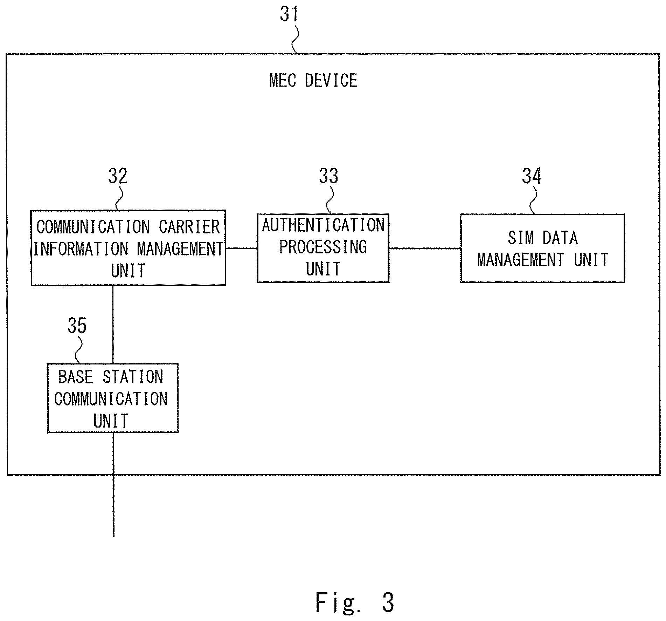

Next, with reference to Fig. 3, a configuration example of the MEC device 31 according to the second embodiment of the present invention will be described. The MEC device 31 is a device to be used in order to execute the processes and the like that have been executed in the core network in a location close to the base station 20. Since various processes are executed in the location close to the base station 20, the distance between the apparatuses that transmit and receive signals becomes shorter and the process delay in accordance with the signal delay in the core network can be canceled. For example, one MEC device 31 may be connected to one base station 20.

The MEC device 31 includes a communication carrier information management unit 32, an authentication processing unit 33, a SIM data management unit 34, and a base station communication unit 35. The communication carrier information management unit 32 manages information regarding the communication carriers that manage the core networks connected to the base station 20.

The information regarding the communication carriers may be, for example, identification information of the communication carriers, service information provided by the communication carriers, charging conditions when the communication carriers provide services, Quality Of Service (QoS) information of the services provided by the communication carriers or the like. The communication carrier information management unit 32 may be, for example, connected to a server device managed by a communication carrier and collect the information regarding the communication carrier from the server device. Alternatively, the administrator who manages the MEC device 31 may input the information regarding the communication carrier into the communication carrier information management unit 32.

The communication carrier information management unit 32 transmits the information regarding the communication carriers via the base station 20 using the base station communication unit 35 in order to cause the communication terminal 10 that has performed the Limited Attach process to select the core network to which the communication terminal 10 will attach.

The authentication processing unit 33 determines whether to allow the communication terminal 10 to execute the Attach process for the core network that the communication carrier selected by the communication terminal 10 manages. The authentication processing unit 33 may request the user who operates the communication terminal 10 to input the ID and the password. When the ID and the password transmitted from the communication terminal 10 coincide with the ID and the password that have been held in advance, the authentication processing unit 33 may allow the communication terminal 10 to execute the Attach process.

Alternatively, the authentication processing unit 33 may perform the authentication process regarding the communication terminal 10 in conjunction with an authentication server arranged in an external network. The authentication server may be referred to, for example, as a Radius server. The authentication processing unit 33 may transmit, for example, information regarding the user who operates the communication terminal 10 to the authentication server managed by a credit card company and use the result of the authentication in the authentication server managed by the credit card company as the result of the determination. The authentication processing unit 33 may request, for example, the user who operates the communication terminal 10 to input the credit card number and the password.

Alternatively, the authentication processing unit 33 may use the result of the authentication in the authentication server managed by the communication carrier as the result of the determination. The authentication server managed by the communication carrier may be, for example, a Home Subscriber Server (HSS), a Home Location Register (HLR) or the like defined in the 3GPP. In this case, the authentication processing unit 33 may receive an authentication vector to be used for authentication of the communication terminal 10 from the HSS or the HLR and execute the authentication process regarding the communication terminal 10. The authentication processing unit 33 outputs the result of the authentication regarding the communication terminal 10 to the SIM data management unit 34.

The SIM data management unit 34 manages the SIM data to be used to connect to a core network managed by a communication carrier for each communication carrier. The SIM data corresponds to the connection information managed by the management apparatus 30 shown in Fig. 1. The SIM data may include, for example, a telephone number, an International Mobile Subscriber Identity (IMSI), a Public Land Mobile Network (PLMN) ID and the like. The SIM data management unit 34 may be connected to, for example, a server device managed by the communication carrier and collect the SIM data from the server device. Alternatively, the administrator who manages the MEC device 31 may input the SIM data into the communication carrier information management unit 32.

Assume a case in which the SIM data management unit 34 has received, from the authentication processing unit 33, the result of the authentication indicating that the communication terminal 10 is allowed to execute the Attach process for the core network that the communication carrier selected by the communication terminal 10 manages. In this case, the SIM data management unit 34 transmits, to the communication terminal 10, the SIM information to be used for the connection to the core network that the communication terminal 10 has selected.

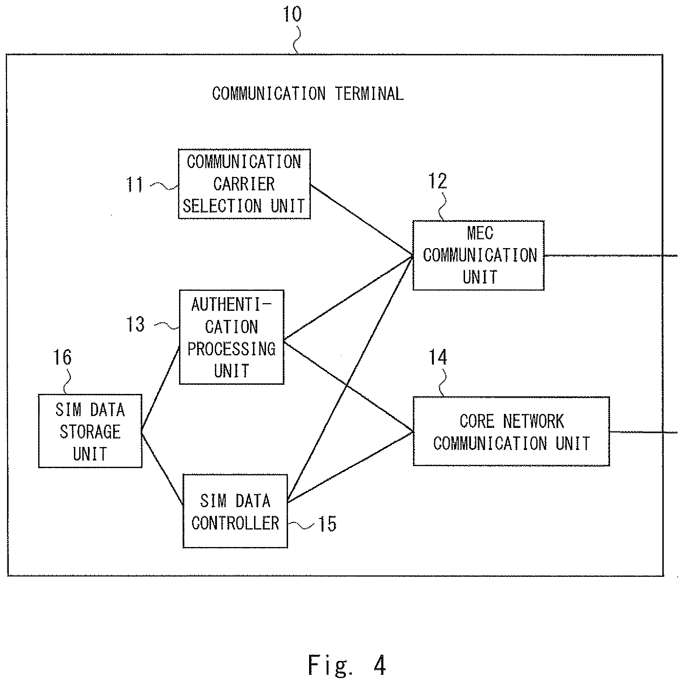

Next, with reference to Fig. 4, a configuration example of the communication terminal 10 according to the second embodiment of the present invention will be described. The communication terminal 10 may be, for example, a mobile telephone terminal or a smartphone terminal. Further, the communication terminal 10 may be a tablet-type terminal, a personal computer or the like having a communication function.

An MEC communication unit 12 transmits and receives data to and from the MEC device 31 via the base station 20. When the power of the communication terminal 10 is turned on, the MEC communication unit 12 transmits the Limited Attach message for requesting the Limited Attach process to the base station 20. The MEC communication unit 12 acquires an IP address allocated from the MEC device 31 as a response message with respect to the Limited Attach message. The MEC communication unit 12 configures the IP address allocated from the MEC device 31 to communicate with the MEC device 31.

A communication carrier selection unit 11 receives, after the Limited Attach process is completed, a list of information items regarding the communication carriers transmitted from the MEC device 31. The communication carrier selection unit 11 selects one of the plurality of communication carriers in accordance with the information input from the user who operates the communication terminal 10. The communication carrier selection unit 11 transmits the information regarding the selected communication carrier to the MEC device 31 via the MEC communication unit 12 and the base station 20.

The communication carrier selection unit 11 may output the list of information items regarding the communication carriers to a display unit (not shown) or the like of the communication terminal 10. The user who operates the communication terminal 10 compares, for example, information such as services and usage fees provided by the communication carriers to select the communication carrier that he/she will use.

An authentication processing unit 13 prompts information that is necessary to execute the authentication process in the MEC device 31 to be input. The authentication processing unit 13 may output, for example, an input format of the information which is required by the MEC device 31 to be input, to a display unit or the like. The authentication processing unit 13 may output, for example, an input format of the ID and the password to be transmitted to the MEC device 31 to the display unit or the like or may output an input format of the credit card number and the password to the display unit or the like.

Further, the authentication processing unit 13 may execute the authentication process with the core network executed in the normal Attach process.

A SIM data storage unit 16 stores the SIM data transmitted from the MEC device 31. The SIM data storage unit 16 may be an internal memory provided in the communication terminal 10 or may be an external memory device or the like disposed in the communication terminal 10. The external memory device may be, for example, a Universal Integrated Circuit Card (UICC) card, a hard disc, a Universal Serial Bus (USB) memory or the like.

A SIM data controller 15 performs processing for storing the SIM data transmitted from the MEC device 31 via the MEC communication unit 12 in the SIM data storage unit 16. The SIM data controller 15 may replace, when it has received SIM data different from the SIM data already stored in the SIM data storage unit 16 from the MEC device 31, the SIM data stored in the SIM data storage unit 16 with the newly received SIM data. Alternatively, the SIM data controller 15 may overwrite and store the newly received SIM data over the SIM data stored in the SIM data storage unit 16. In one more alternative, the SIM data controller 15 may store the new SIM data in an area different from the area of the SIM data storage unit 16 that stores the SIM data and thus store the plurality of pieces of SIM data in the SIM data storage unit 16.

Further, the SIM data controller 15 outputs the SIM data to be configured in the Attach message to a core network communication unit 14 when it executes the normal Attach process for the core network.

The core network communication unit 14 transmits the Attach message in which the SIM data has been configured to the selected core network via the base station 20.

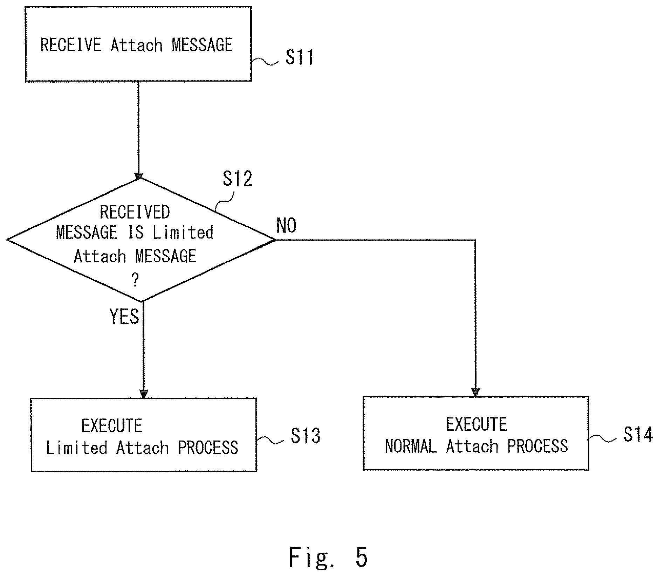

Next, with reference to Fig. 5, a flow of an Attach determination process in the base station 20 according to the second embodiment of the present invention will be described. First, the Attach process determination unit 21 receives the Attach message transmitted from the communication terminal 10 (S11).

Next, the Attach process determination unit 21 determines whether the Attach message that it has received is the Limited Attach message (S12). The Attach process determination unit 21 may determine that the received message is the Limited Attach message when, for example, the message is configured to be the Limited Attach message. Alternatively, the Attach process determination unit 21 may determine that the received message is the Limited Attach message when the information regarding the communication carrier has not been configured in the Attach message that it has received.

When the Attach process determination unit 21 has determined that the Attach message that it has received is the Limitede Attach message, it executes the Limited Attach process (S13). Specifically, the Attach process determination unit 21 transmits the Limited Attach message to the MEC device 31. When the Attach process determination unit 21 has determined that the Attach message that it has received is not the Limited Attach message, it executes the normal Attach process (S14). Specifically, the Attach process determination unit 21 transmits the Attach message to the MME or the like in the core network. Alternatively, the Attach process determination unit 21 may determine whether the Attach message that it has received is the normal Attach message. When the Attach process determination unit 21 has determined that the Attach message that it has received is not the normal Attach message, it may execute the Limited Attach process. On the other hand, when the Attach process determination unit 21 has determined that the received message is the normal Attach message, it may execute the normal Attach process.

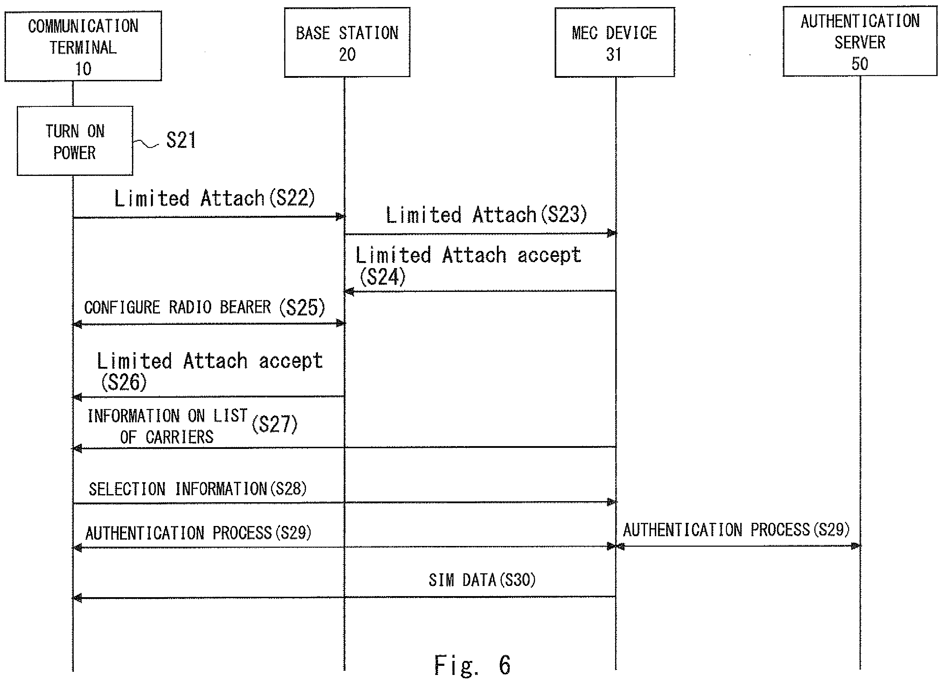

Next, with reference to Fig. 6, a flow of the Limited Attach process according to the second embodiment of the present invention will be described. First, the user who operates the communication terminal 10 presses down the power button, whereby the power supply of the communication terminal 10 is turned on (S21).

Next, the communication terminal 10 transmits the Limited Attach message to the base station 20 (S22). Next, when the base station 20 determines that the message transmitted from the communication terminal 10 is the Limited Attach message, the base station 20 transmits the Limited Attach message to the MEC device 31 (S23).

Next, the MEC device 31 transmits, to the base station 20, a Limited Attach accept message in which the IP address to be allocated to the communication terminal 10 has been configured (S24). Next, the base station 20 configures a Radio Bearer with the communication terminal 10 (S25). Next, the base station 20 transmits the Limited Attach accept message to the communication terminal 10 (S26). When the communication terminal 10 receives the Limited Attach accept message, the communication terminal 10 uses the IP address allocated by the MEC device 31 for the subsequent communications.

Next, the MEC device 31 transmits information on the list of carriers to the communication terminal 10 via the base station 20 (S27). The MEC device 31 may transmit, for example, the information on the list of carriers as application information and the communication terminal 10 may check the information on the list of carriers on a Web page. The MEC device 31 may also transmit, besides the information on the list of carriers, information on services provided by the communication carriers, charging conditions when the communication carriers provide the services, or QoS information or the like of the services provided by the communication carriers as well.

The service information may be, for example, information regarding whether voice communication is available. The charging conditions may be referred to, for example, as tariff information, and information indicating that the weekend usage fee will be discounted, the usage fee during night time will be discounted or the like may be transmitted as the tariff information. Further, information regarding the type of the credit card that can be used may be sent as the charging conditions, and information regarding whether Apple (registered trademark) ID, a Google Play (registered trademark) card or the like is available may be sent.

The QoS information may be, for example, information regarding the communication speed, the communication band or the like that is guaranteed. Further, the MEC device 31 may transmit sale information or the like of each communication carrier to the communication terminal 10.

Next, the communication terminal 10 transmits information indicating the communication carrier selected from the information on the list of carriers to the MEC device 31 via the base station 20 (S28). Further, the communication terminal 10 may transmit information to be used for the authentication process in the MEC device 31 to the MEC device 31 together with the information indicating the selected communication carrier.

Next, the MEC device 31 performs the process of authenticating the communication terminal 10 between an external authentication server 50 and the communication terminal 10 (S29). When the communication terminal 10 is authenticated by the authentication server, the MEC device 31 transmits the SIM data regarding the communication carrier selected by the communication terminal 10 to the communication terminal 10 (S30). Further, the expiration date or the like may be configured in the SIM data to be transmitted to the communication terminal 10 from the MEC device 31.

The MEC device 31 may periodically acquire the latest SIM data from the server device or the like of each communication carrier. The SIM data may include, for example, a telephone number, an IMSI, a PLMN ID and the like. The SIM data may further include Access Point Name (APN), Proxy-Call Session Control Function (P-CSCF) information or the like.

Further, while the example in which the MEC device 31 transmits the SIM data to the communication terminal 10 in Step S29 is shown in Fig. 6, the MEC device 31 may transmit address information on the server that stores the SIM data to the communication terminal 10. In this case, the communication terminal 10 accesses the server and downloads the SIM data.

Further, the MEC device 31 may acquire the SIM data from the server that stores the SIM data after the authentication process in Step S29 is completed (S30). In this case, the MEC device 31 transmits, after it acquires the SIM data from the server, the SIM data that it has acquired to the communication terminal 10.

After the communication terminal 10 configures the SIM data, it executes the normal Attach process. Further, in this diagram, the process in which the MEC device 31 transmits the information on the list of carriers to the communication terminal 10 in Step S27 is described. Alternatively, the MEC device 31 may transmit the information on the list of carriers to the communication terminal 10 after receiving a message regarding a request for acquiring the information on the list of carriers transmitted from the communication terminal 10.

As described above, by using the MEC device 31 according to the second embodiment of the present invention, the communication terminal 10 is able to acquire the SIM data that is necessary to use the core network managed by the communication carrier after checking the services and the like provided by the respective communication carriers. Accordingly, the communication terminal 10 is able to flexibly select the communication carrier in accordance with the services or the like that are provided.

Further, the base station 20 may transmit the information regarding the MVNO to the communication terminal 10 as the information regarding the communication carrier. It is assumed, for example, that the MVNO is using a line in the network managed by the MNO. In this case, the MNO that manages the base station 20 may transmit, to the communication terminal 10, information regarding a plurality of MVNOs to which lines are leased, as listing information.

### (Third Embodiment)

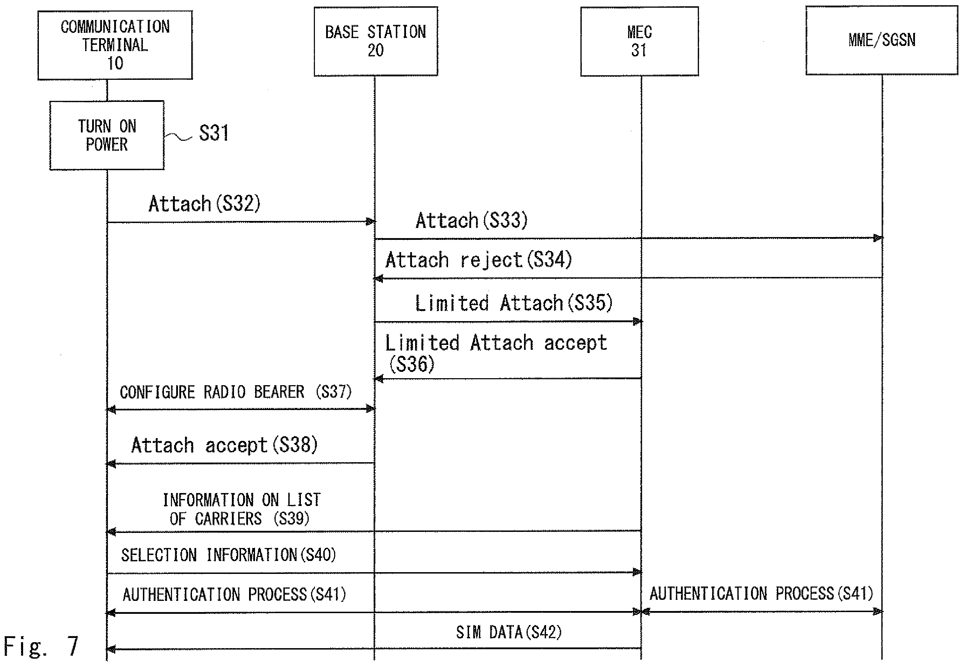

Next, with reference to Fig. 7, a flow of a Limited Attach process according to a third embodiment of the present invention will be described. With reference to Fig. 7, a flow of the process when the communication terminal 10 has executed the Attach process using the SIM data that has expired will be described.

First, the user who operates the communication terminal 10 presses down the power button, whereby the power supply of the communication terminal 10 is turned on (S31).

Next, the communication terminal 10 transmits the Attach message to the base station 20 using the SIM data stored in the SIM data storage unit 16 (S32). Next, the base station 20 transmits, when it is determined that the message transmitted from the communication terminal 10 is the normal Attach message, the Attach message to the MME, the SGSN or the like of the core network specified in the Attach message (S33). The Attach message (S33) may include a parameter that reports that the base station 20 is able to execute the Limited Attach process.

Next, when the MME or the SGSN determines that the SIM data configured in the Attach process has expired, the MME or the SGSN transmits an Attach reject message to the base station 20 (S34). While the case in which the MME or the SGSN has transmitted the Attach reject message in accordance with the expiration date of the SIM data has been described, the MME or the SGSN may transmit the Attach reject message due to other reasons. When, for example, a roaming contract is not exchanged with the communication carrier that manages the MME or the SGSN or when a fee has not yet been paid, the MME or the SGSN may transmit the Attach reject message. The Attach reject message may include a dedicated parameter that prompts the base station 20 to perform the Limited Attach process or a Cause value.

Next, the base station 20 transmits the Limited Attach message to the MEC device 31 in order to provide information regarding other communication carriers for the communication terminal 10 (S35). Next, the MEC device 31 transmits the Limited Attach accept message to the base station 20 (S36). Next, the base station 20 configures a Radio Bearer with the communication terminal 10 (S37). Next, the base station 20 transmits the Attach accept message to the communication terminal 10 as a response to the Attach message in Step S32 (S38).

Since Steps S39 to S42 are similar to Steps S27 to S30 in Fig. 6, detailed descriptions thereof will be omitted.

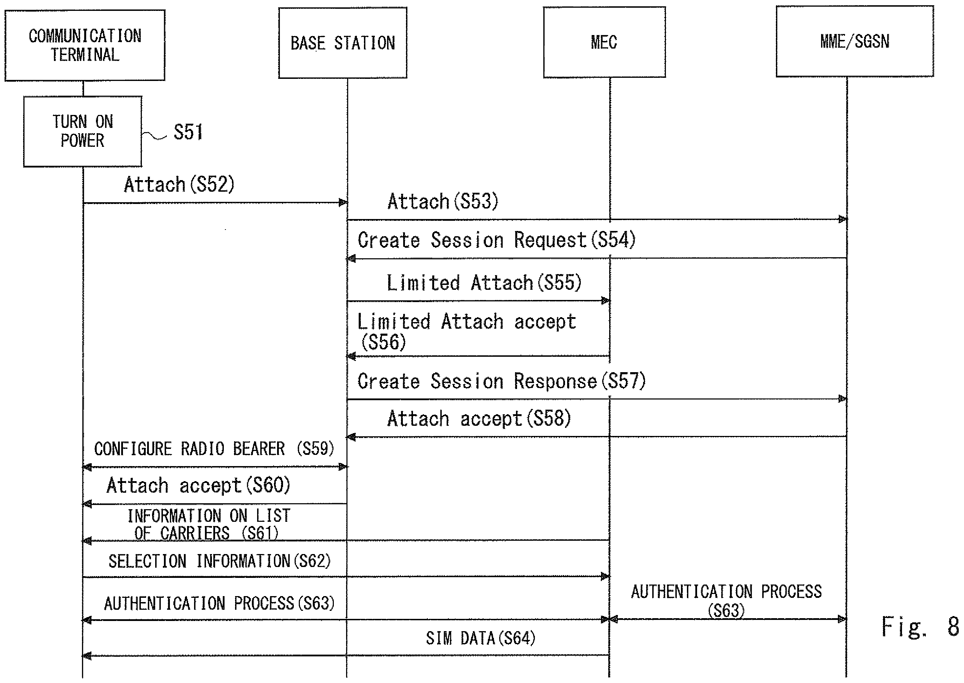

Next, with reference to Fig. 8, a flow of the Limited Attach process according to the third embodiment of the present invention different from that of Fig. 7 will be described. With reference to Fig. 8, a flow of a case in which the connection between the communication terminal 10 and the management apparatus 30 is secured by the capability such as a Local IP Access (LIPA) or Selected IP Traffic Offload (SIPTO) already defined in the 3GPP standards will be described.

First, the user who operates the communication terminal 10 presses down the power button, whereby the power supply of the communication terminal 10 is turned on (S51).

Next, the communication terminal 10 transmits the Attach message to the base station 20 using the SIM data stored in the SIM data storage unit 16 (S52). Next, when the base station 20 determines that the message transmitted from the communication terminal 10 is the normal Attach message, the base station 20 transmits the Attach message to the MME, the SGSN or the like of the core network specified by the Attach message (S53). The Attach message may include a parameter notifying that the base station 20 is able to execute the Limited Attach process.

Next, when the MME or the SGSN determines that the SIM data configured in the Attach process has expired, the MME or the SGSN transmits a Create Session request message to a GW installed together with the base station 20 using a LIPA or a SIPTO function (S54). While the case in which the MME or the SGSN has transmitted the Create Session request message in accordance with the expiration date of the SIM data is described in this example, the MME or the SGSN may transmit the Attach reject message due to other reasons. When, for example, a roaming contract is not exchanged with the communication carrier that manages the MME or the SGSN or when a fee has not yet been paid, the MME or the SGSN may transmit the Create Session request message. The Create Session request message may include a dedicated parameter that prompts the base station 20 to perform the Limited Attach process or a Cause value.

Next, the base station 20 transmits the Limited Attach message to the MEC device 31 in order to provide information regarding other communication carriers for the communication terminal 10 (S55). Next, the MEC device 31 transmits the Limited Attach accept message to the base station 20 (S56). Next, the base station 20 transmits a Create Session response message to the MME or the SGSN as a response to the Create Session request message in Step S54 (S57).

Next, the MME or the SGSN transmits the Attach accept message to the base station 20 (S58). Next, the base station 20 configures a Radio Bearer with the communication terminal 10 (S59). Next, the base station 20 transmits the Attach accept message to the communication terminal 10 as a response to the Attach message in Step S52 (S60).

Since Steps S61 to S64 are similar to Steps S27 to S30 in Fig. 6, detailed descriptions thereof will be omitted.

As described above, by executing the Limited Attach process according to the third embodiment of the present invention, even when the communication terminal 10 is using the SIM data that has expired, the base station 20 is able to transmit the Limited Attach message regarding the communication terminal 10 to the MEC device 31. The communication terminal 10 is therefore able to acquire new SIM data.

Further, when the communication terminal 10 has received the Attach reject message from the MME, the SGSN or the like due to a fee not yet paid etc., the communication terminal 10 may select, in Step S40 or Step S62, the communication carrier and perform payment processing using a credit card or the like. In this case, the MEC device 31 may allow the communication terminal 10 to perform communication using the SIM data that the communication terminal 10 currently holds without transmitting new SIM data to the communication terminal 10.

While the present invention has been described as a hardware configuration in the aforementioned embodiments, the present invention is not limited thereto. The present invention is able to achieve the processing in the communication terminal 10, the base station 20, the management apparatus 30, or the MEC device 31 by causing a Central Processing Unit (CPU) to execute a computer program.

In the aforementioned examples, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The present invention is not limited to the aforementioned embodiments and may be changed as appropriate without departing from the spirit of the present invention.

While the present invention has been described above with reference to the embodiments, the present invention is not limited to them. Various changes that may be understood by one ordinary skilled in the art may be made on the configuration and the details of the present application within the scope of the present invention.

This application is based upon and claims the benefit of priority from Japanese Patent Application No. 2015-042152, filed on March 4, 2015, the disclosure of which is incorporated herein in its entirety by reference.

### Reference Signs List

10 COMMUNICATION TERMINAL
11 COMMUNICATION CARRIER SELECTION UNIT
12 MEC COMMUNICATION UNIT
13 AUTHENTICATION PROCESSING UNIT
14 CORE NETWORK COMMUNICATION UNIT
15 SIM DATA CONTROLLER
16 SIM DATA STORAGE UNIT
20 BASE STATION
21 Attach PROCESS DETERMINATION UNIT
22 TERMINAL COMMUNICATION UNIT
23 MEC COMMUNICATION UNIT
24 CORE NETWORK COMMUNICATION UNIT
30 MANAGEMENT APPARATUS
31 MEC DEVICE
32 COMMUNICATION CARRIER INFORMATION MANAGEMENT UNIT
33 AUTHENTICATION PROCESSING UNIT
34 SIM DATA MANAGEMENT UNIT
35 BASE STATION COMMUNICATION UNIT
40 CORE NETWORK
41 CORE NETWORK

## Claims

1. A communication system comprising:
a core network managed by a communication carrier;
a management apparatus configured to manage connection information to be used at a time of connection to the core network; and
a base station configured to be connected to the core network and the management apparatus,
wherein the base station transmits, upon receiving a first connection request message that does not specify the communication carrier from a communication terminal, information regarding a plurality of communication carriers to the communication terminal and transmits connection information regarding one of the plurality of communication carriers selected by the communication terminal to the communication terminal.

2. The communication system according to Claim 1, wherein the base station transmits, upon receiving the first connection request message, information on a list of a plurality of communication carriers that are available to the communication terminal.

3. The communication system according to Claim 2, wherein the base station further transmits, upon receiving the first connection request message, information on usage fees of the plurality of available communication carriers to the communication terminal.

4. The communication system according to any one of Claims 1 to 3, wherein the base station transmits the connection information to the communication terminal after performing authentication regarding the communication terminal.

5. The communication system according to any one of Claims 1 to 4, wherein the connection information is SIM data.

6. The communication system according to any one of Claims 1 to 5, wherein the base station transmits, upon receiving a second connection request message specifying the communication carrier from the communication terminal, the second connection request message to the core network and transmits, when the connection of the communication terminal is not permitted in the core network, information regarding a plurality of communication carriers to the communication terminal.

7. The communication system according to any one of Claims 1 to 6, wherein the base station transmits information regarding a plurality of communication carriers to the communication terminal, using an IP address that the management apparatus has allocated to the communication terminal as a destination.

8. The communication system according to any one of Claims 1 to 7, wherein a Mobile Edge Computing (MEC) device is used as the management apparatus.

9. A base station configured to be connected to a core network managed by a communication carrier and a management apparatus configured to manage connection information to be used at a time of connection to the core network,
wherein the base station comprises determination means for transmitting, upon receiving a first connection request message that does not specify the communication carrier from a communication terminal, information regarding a plurality of communication carriers to the communication terminal and transmitting connection information regarding one of the plurality of communication carriers selected by the communication terminal to the communication terminal.

10. A determination method in a base station configured to be connected to a core network managed by a communication carrier and a management apparatus configured to manage connection information to be used at a time of connection to the core network, the determination method comprising:
transmitting, upon receiving a first connection request message that does not specify the communication carrier from a communication terminal, information regarding a plurality of communication carriers to the communication terminal; and
transmitting connection information regarding one of the plurality of communication carriers selected by the communication terminal to the communication terminal.

11. A communication terminal configured to communicate with a base station, the base station being configured to be connected to a core network managed by a communication carrier and a management apparatus configured to manage connection information to be used at a time of connection to the core network, the communication terminal comprising:
a first communication means for transmitting a first connection request message that does not specify the communication carrier;
selection means for selecting one of a plurality of communication carriers transmitted from the base station; and
a second communication means for transmitting a second connection request message to a core network managed by the selected communication carrier using connection information on the selected communication carrier transmitted from the management apparatus.

12. A connection method in a communication terminal configured to communicate with a base station, the base station being configured to be connected to a core network managed by a communication carrier and a management apparatus configured to manage connection information to be used at a time of connection to the core network, the connection method comprising:
transmitting a first connection request message that does not specify the communication carrier;
selecting one of a plurality of communication carriers transmitted from the base station; and
transmitting a second connection request message to a core network managed by the selected communication carrier using connection information on the selected communication carrier transmitted from the management apparatus.
